# EUROPEAN PATENT APPLICATION

(11) **EP 3 545 760 A1**
(43) Date of publication of application: **02.10.2019**
(21) Application number: 18164138.2
(22) Date of filing: 27.03.2018
(51) Int. Cl.: A01M 21/04

(54) **APPARATUS FOR WEED CONTROL**

(71) Applicant: Bayer AG, 51373 Leverkusen (DE)
(72) Inventor: JIMENEZ TARODO, Sergio, 40591 Düsseldorf (DE); KILIAN, Michael, 51379 Leverkusen (DE); HADLOW, James, CB8 9DJ Newmarket (GB); GIRAUB, Virginie, 69130 Ecully (FR); ARIANS, Thomas, 41569 Rommerskirchen (DE)
(74) Representative: BIP Patents

(57) **Abstract**

The present invention relates to an apparatus for weed control. It is described to provide (210) a processing unit with a least one sensor data of an environment. The processing unit analyses (220) at least some of the at least one sensor data to determine at least one ground property for each of a plurality of locations of the environment. The processing unit determines (230) a power setting for activation of at least one electrode based weed control unit for each of the plurality of locations. The determination of the power setting for activation of the electrode based weed control unit comprises utilization of the at least one ground property associated with that location. An output unit outputs (240) information useable to activate the at least one electrode based weed control unit.

## Description

### FIELD OF THE INVENTION

The present invention relates to an apparatus for weed control, to a system for weed control, to a method for weed control, as well as to a computer program element and a computer readable medium.

### BACKGROUND OF THE INVENTION

The general background of this invention is weed control. Certain industrial areas and areas around railway tracks need to have the vegetation controlled. For railways, such control improves visibility from the perspective of people on the train such as the driver and improves visibility from the perspective of people working on the tracks. Such control can lead to improved safety. Additionally, vegetation can disrupt or damage tracks and associated signaling and communication lines. Control of the vegetation is then required to mitigate this. Vegetation control, also called weed control, can be very time and resource consuming, especially if carried out manually. A weed sprayer train, with a herbicide contained in chemical tanks on the train can be sprayed onto the track and surrounding area to control the vegetation. However, such weed control can be expensive, and the general public increasingly wishes to see a reduction in environmental impact.

### SUMMARY OF THE INVENTION

It would be advantageous to have improved apparatus for weed control.

The object of the present invention is solved with the subject matter of the independent claims, wherein further embodiments are incorporated in the dependent claims. It should be noted that the following described aspects and examples of the invention apply also for the apparatus for weed control, the system for weed control, the method for weed control, and for the computer program element and the computer readable medium.

According to a first aspect, there is provided an apparatus for weed control, comprising:
- an input unit;
- a processing unit; and
- an output unit.

The input unit is configured to provide the processing unit with a least one sensor data of an environment. The processing unit is configured to analyse at least some of the at least one sensor data to determine at least one ground property for each of a plurality of locations of the environment. The processing unit is configured to determine a power setting for activation of at least one electrode based weed control unit for each of the plurality of locations. Determination of the power setting for activation of the electrode based weed control unit comprises utilization of the at least one ground property associated with that location. The output unit is configured to output information useable to activate the at least one electrode based weed control unit.

In other words, sensor data of an environment have been acquired. There are a number of electrode based weed control units that can each, through the use of two electrodes, apply a voltage between the electrodes in order that current flows from one electrode to the other via the ground and any local vegetation at that position. In doing so, weeds can be controlled or killed. However, depending on the ground properties at different locations in the environment, such as the ground being wet, or dry, or compacted, or crumbly, or stony, or having voids, or having significant vegetation root content, or being of different soil types that can have different electrical conduction properties, the configuration of an electrode based weed control unit can be required to be different in order to operate in an optimum manner. Thus, in some situations the ground can be more conductive than in other situations, such as when wet compared to dry or depending upon the type of soil and even if there are particular plant roots present that can provide conductive pathways. Thus, the voltage between electrodes and/or the current to be applied through the ground needs to be varied in order to provide for optimum weed control at that position. Similarly, if the ground is crumbly or has voids, the required optimum configuration is different to that when the ground is compacted. Furthermore, even if the ground is dry, different soil types such as peaty in comparison to clay type soils require different optimum configuration settings for an electrode based weed control unit. Also, whether the ground has significant vegetation root matter, especially long tap roots, can again change the way the current flows through the ground and the optimum configuration settings need to be varied accordingly. Therefore, sensor data is acquired of the environment, enabling ground properties to be determined, thereby enabling the electrode weed control units to be correctly configured in order to operate in an optimum manner.

In this manner, weeds that are present at different locations can be optimally controlled, because an electrode based weed control unit is operating in an optimum manner, which takes into account the ground properties at a particular location.

In an example, the at least one sensor data comprises at least one image. The processing unit is configured to analyse the at least one image to determine at least one activation location of the plurality of locations for activation of the at least one electrode based weed control unit.

In other words, an image or images of an environment have been acquired. There is an electrode based weed control unit or a number of electrode based weed control units that can activate to pass current through the ground at a high potential at one or more locations determined from image analysis of those image(s), and where the electrode weed control technology is optimally configured for activation at that location. In this manner, weeds can be killed or controlled.

In this way, weeds in the environment can be controlled in areas on the basis of image analysis, enabling the high voltage electrodes to be applied (activated) only where required, and where for each application area the optimum configuration of the electrode based weed control unit is provided. For example, in areas of the environment such as concrete areas, tarmac areas, at locations of metal and or wooded railway track sleepers, at the location of the metal railway track, it can be determined that the electrodes should not be activated because weeds cannot or generally do not grow in these areas. In this way, less power is used and the environmental impact is reduced. Also, a determination can be made of areas of the environment, such as where there is sensitive equipment, that can be imaged and identified and where the electrodes are not activated in order not to damage such equipment. Also, if for example an animal was determined to be in the path of the high voltage weed killing device, image processing can identify the animal (such as a badger, rabbit, dog, cat) and the electrodes not activate, and the activation system even be raised above the animal, in order that the animal is not killed or harmed.

Also, it can be determined on the basis of image analysis where the electrodes should be activated in addition to or in contrast to determining where they should not be activated, such as determining a location or locations of weeds and the electrodes activated at that location. Again, this enables the electrodes to be activated only where required, with cost, time and environmental impact advantages accruing.

Thus, the apparatus can determine how to configure the electrodes for different locations based on ground properties, and the electrodes can then be primed to activate, but are only activated at particular locations on the basis of image processing of image data.

In an example, analysis of the at least one image to determine the at least one activation location comprises a determination of at least one location of vegetation.

In other words, image processing can be used in order to determine the areas of vegetation in the acquired imagery, from which a decision can be made to activate the electrode based weed control unit at that location. In this manner, the electrodes can be activated only at areas and around areas of vegetation. Thus, weeds in an area can be controlled through the targeted application of electrical power through the plants and the ground and hence through the plants' roots in order to control and kill weeds, but application is conducted only where there is vegetation, however the activation is at a level that is optimised for the ground conditions at that activation location.

In an example, determination of the power setting for activation of the at least one electrode based weed control unit for the activation location comprises utilization of the determined at least one location of vegetation.

In other words, a power setting for the electrode based weed control unit can account for ground conditions, such as soil type, conductivity etc., and additionally this power setting can be further adjusted to account for vegetation that has been detected via image processing analysis. Thus, the apparatus can determine in effect a baseline power setting that accounts for the ground type, and prime the electrode based weed control unit to operate at for example a particular voltage and current, but the unit is not activated until vegetation is detected. But, when vegetation is detected a slight adjustment of the voltage and/or power settings can then be made to account for the vegetation, such as the size or density of the vegetation, and the unit can then be activated more rapidly because the adjustments do not have to be too large. Then, the electrode based weed control unit is operating in a configuration that is optimum with respect to vegetation being present at a particular location that accounts for the ground properties at that location. Thus, the power setting to kill a particular sized clump of weeds in clay can be different to that required to kill the same sized clump of weeds in a sandy soil, and if in an adjacent location (for either clay or sandy conditions) a smaller clump of weeds is found, again and appropriate adjustment of the power settings can be made, that can be different to that for the larger clump of weeds.

In an example, analysis of the at least one image to determine the at least activation location comprises a determination of at least one type of weed.

In an example, determination of the power setting for activation of the at least one electrode based weed control unit for the activation location comprises utilization of the determined at least one type of weed.

In other words, the appropriate power setting for the electrode based weed control unit can be selected to account for the type or types of weeds to be controlled, as well as the ground conditions where that particular type of weed is found.

To put this another way, image processing can be used to determine a type of weed and its location, with sensor data used to determine a ground property that provides a first level of power setting, with the specific weed determined then augmenting that first power setting to provide a second power setting that is optimum for killing that specific weed at that specific location, accounting for the soil/ground conditions at that location. The location can be the location within the imagery. The location can be an actual geographical location. The location can be within the imagery and be able to be referenced to a position of the at least one electrode based weed control unit.

In an example, analysis of the at least one image comprises utilisation of a machine learning algorithm.

In an example, the at least one ground property comprises one or more of: a measure of ground moisture; a measure of ground texture; a measure of ground conductivity; a measure of ground temperature; a measure of ground hardness; a measure of plant root occurrence; a measure of ground type; a measure of salinity.

In an example, the at least one sensor data was acquired by at least one sensor, and wherein the input unit is configured to provide the processing unit with at least one location associated with the at least one sensor when the at least one sensor data was acquired.

The location can be a geographical location, with respect to a precise location on the ground, or can be a location on the ground that is referenced to a position or positions of electrode based weed control units. In other words, an absolute geographical location can be utilized or a location on the ground that need not be known in absolute terms, but that is referenced to a location of the electrode based weed control units. Thus, by correlating an image with the location where it was acquired, electrical power can be accurately applied to that location.

In an example, the at least one sensor comprises one or more of: a camera; a ground moisture sensor; a ground texture sensor; an electrical conductivity sensor; a soil insertion sensor; an electromagnetic induction sensor; a temperature sensor; a ground hardness sensor; a root occurrence sensor; a ground type sensor; a salinity sensor; at least one reflectance sensor configured to operate in one or more of the visible, the infrared, the near infrared, the mid infrared, the far infrared.

According to a second aspect, there is provided a system for weed control, comprising:
- at least one sensor;
- an apparatus for weed control according to the first aspect; and
- at least one electrode based weed control unit.

The at least one sensor is configured to acquire the at least one sensor data of the environment. The at least electrode based weed control unit is mounted on a vehicle. The apparatus is configured to activate the at least one electrode based weed control unit.

In this way, a vehicle can move around an environment and control weeds within that environment using one or more electrode based weed control units at locations where the power setting has been adjusted to take into account the ground conditions at the different locations. In this way, sensor data can be acquired by one platform, for example one or more drones that fly over an environment. That information is sent to an apparatus, that could be in an office. The apparatus determines the configuration for the electrodes at different locations within the environment. This information, can be provided in a feature map and/or weed control map, that is provided to a vehicle that moves around that environment, and at specific parts of the environment the electrodes are activated at the correct power setting. Alternatively, this could be occurring for one vehicle that acquires the data, processes the data, and that has the electrode systems on the vehicle, and the vehicle determines the optimum power settings as it travels around the environment that accounts for the local ground conditions and properties.

In an example, the apparatus is mounted on the vehicle; and wherein the at least one sensor is mounted on the vehicle.

In this manner, the system can operate in real time or quasi real time, by acquiring imagery, analysing it to determine what power setting to use where, and then activating the appropriate electrode based weed control unit at the required specific location.

In an example, the at least one sensor comprises one or more of: a camera; a ground moisture sensor; a ground texture sensor; a ground conductivity sensor; an electromagnetic induction sensor; a ground temperature sensor; a soil insertion sensor; a ground hardness sensor; a root occurrence sensor; a ground type sensor; a salinity sensor, a reflectance sensor.

According to a third aspect, there is provided a method for weed control, comprising:
a) providing a processing unit with a least one sensor data of an environment;
b) analysing by the processing unit at least some of the at least one sensor data to determine at least one ground property for each of a plurality of locations of the environment;
d) determining by the processing unit a power setting for activation of at least one electrode based weed control unit for each of the plurality of locations, wherein determination of the power setting for activation of the electrode based weed control unit comprises utilization of the at least one ground property associated with that location; and
e) outputting by an output unit output information useable to activate the at least one electrode based weed control unit.

According to another aspect, there is provided a computer program element for controlling an apparatus according to the apparatus of the first aspect and/or system according to the second aspect, which when executed by a processor is configured to carry out the method of the third aspect.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of an apparatus for weed control;
Fig. 2 shows a schematic set up of an example of a system for weed control;
Fig. 3 shows a method for weed control;
Fig. 4 shows a schematic set up of an example of a system for weed control;
Fig. 5 shows a schematic set up of an example of a system for weed control;
Fig. 6 shows a schematic set up of an example of a part of a system for weed control;
Fig. 7 shows a schematic set up of more detail of a section of the part of the system for weed control shown in Fig. 6; and
Fig. 8 shows a schematic representation of a railway track and surrounding area.

### DETAILED DESCRIPTION OF EMBODIMENTS

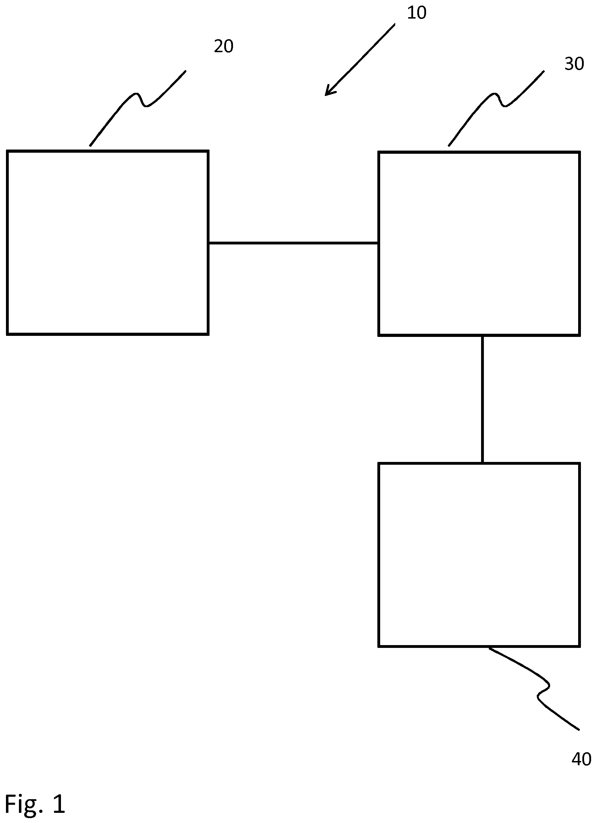

Fig. 1 shows an example of an apparatus 10 for weed control. The apparatus 10 comprises an input unit 20, a processing unit 30, and an output unit 40. The input unit 20 is configured to provide the processing unit 30 with a least one sensor data of an environment. The processing unit 30 is configured to analyse at least some of the at least one sensor data to determine at least one ground property for each of a plurality of locations of the environment. The processing unit 30 is configured also to determine a power setting for activation of at least one electrode based weed control unit for each of the plurality of locations. Determination of the power setting for activation of the electrode based weed control unit comprises utilization of the at least one ground property associated with that location. The output unit 30 is configured to output information useable to activate the at least one electrode based weed control unit.

In an example, the apparatus is operating in real-time, where sensor data are acquired and immediately processed and one, or more than one, electrode based weed control unit is configured and activated.

In an example, the apparatus is operating in quasi real time, where sensor data are acquired of an environment and immediately processed to determine the correct configuration of the electrode based weed control units. That information can later be used by an appropriate system (or systems) that travel(s) within the environment and activates the electrode based weed control units at particular parts of that environment. Thus for example, a first vehicle, such as a car, train, lorry or unmanned aerial vehicle (UAV) or drone equipped with one or more sensors can travel within an environment and acquire sensor data. This sensor data can be immediately processed to determine ground properties around an environment, from which the configuration of the electrode weed control units can be determined for different locations in the environment. Later, a vehicle equipped with an electrode based weed control unit or units can travel within the environment and activate the electrodes at different specific areas of the environment, where the electrode weed control units are appropriately configured for the different locations.

In an example, the apparatus is operating in an offline mode. Thus, sensor data that has previously been acquired is provided later to the apparatus. The apparatus then determines what the configuration of the electrode based weed control units should be at different locations in the environment. This information is then used later by one or more vehicles that then travel within the area and activate their electrode weed control units, appropriately configured, to specific parts of the environment.

In an example, the output unit outputs a signal that is directly useable to activate the at least one electrode based weed control unit.

According to an example, the at least one sensor data comprises at least one image. The processing unit is configured to analyse the at least one image to determine at least one activation location of the plurality of locations for activation of the at least one electrode based weed control unit.

According to an example, analysis of the at least one image to determine the at least one activation location comprises a determination of at least one location of vegetation.

According to an example, determination of the power setting for activation of the at least one electrode based weed control unit for the activation location comprises utilization of the determined at least one location of vegetation.

According to an example, analysis of the at least one image to determine the at least activation location comprises a determination of at least one type of weed.

According to an example, determination of the power setting for activation of the at least one electrode based weed control unit for the activation location comprises utilization of the determined at least one type of weed.

According to an example, analysis of the at least one image comprises utilisation of a machine learning algorithm.

In an example, the machine learning algorithm comprises a decision tree algorithm.

In an example, the machine learning algorithm comprises an artificial neural network.

In an example, the machine learning algorithm has been taught on the basis of a plurality of images. In an example, the machine learning algorithm has been taught on the basis of a plurality of images containing imagery of at least one type of weed. In an example, the machine learning algorithm has been taught on the basis of a plurality of images containing imagery of a plurality of weeds.

According to an example, the at least one ground property comprises one or more of: a measure of ground moisture; a measure of ground texture; a measure of ground conductivity; a measure of ground temperature; a measure of ground hardness; a measure of plant root occurrence; a measure of ground type; a measure of salinity.

According to an example, the at least one sensor data was acquired by at least one sensor. The input unit is configured to provide the processing unit with at least one location associated with the at least one sensor when the at least one sensor data was acquired.

In an example, the location is an absolute geographical location.

In an example, the location is a location that is determined with reference to the position or positions of the electrode based weed control units. In other words, an image can be determined to be associated with a specific location on the ground, without knowing its precise geographical position, but by knowing the position of the electrode based weed control units with respect to that location at the time the image was acquired, the required power can then be applied at a later time at that location by moving the appropriate electrode based weed control unit to that location, for example through movement of a vehicle to which the electrode based weed control unit is attached. Thus, for example one or more sensors can be mounted on a vehicle, such as a train, forward of the position where electrodes for controlling weeds are mounted. Knowledge of the distance between these mounting positions, and a speed of the train, enables sensor data to be acquired at a location and then at an appropriate time later depending upon the speed of the train, the electrodes can be activated at the same location where the sensor data was acquired.

In an example, a GPS unit is used to determine, and/or is used in determining, the location of the at least one sensor when specific sensor data were acquired.

In an example, an inertial navigation unit is used alone, or in combination with a GPS unit, to determine the location of the at least one sensor when specific data were acquired. Thus for example, the inertial navigation unit, comprising for example one or more laser gyroscopes, is calibrated or zeroed at a known location and as it moves with the at least one sensor the movement away from that known location in x, y, and z coordinates can be determined, from which the location of the at least one sensor when sensor data were acquired can be determined.

In an example, image processing of acquired imagery is used alone, or in combination with a GPS unit, or in combination with a GPS unit and inertial navigation unit, to determine the location of the at least one sensor when specific data were acquired. Thus visual markers can be used alone, or in combination with GPS derived information.

According to an example, the at least one sensor comprises one or more of: a camera; a ground moisture sensor; a ground texture sensor; an electrical conductivity sensor; a soil insertion sensor; an electromagnetic induction sensor; a temperature sensor; a ground hardness sensor; a root occurrence sensor; a ground type sensor; a salinity sensor; at least one reflectance sensor configured to operate in one or more of the visible, the infrared, the near infrared, the mid infrared, the far infrared.

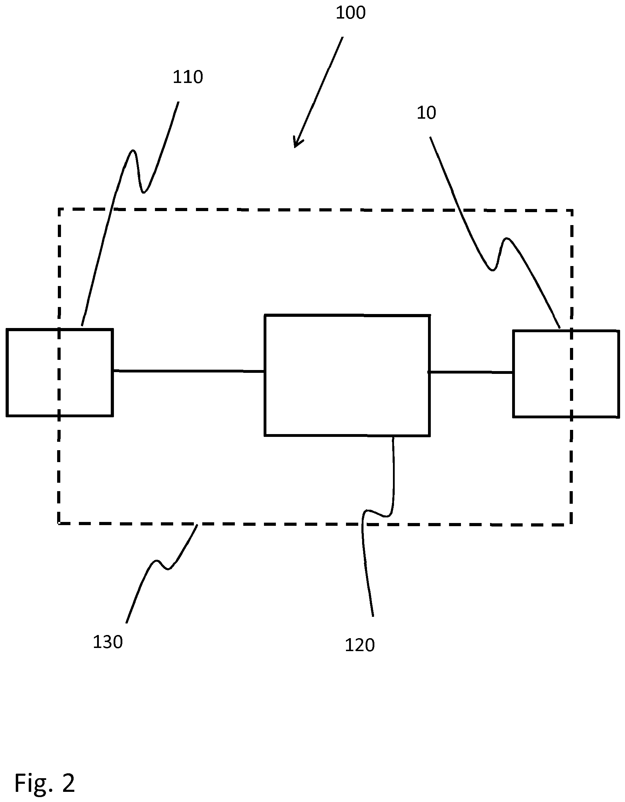

Fig. 2 shows an example of a system 100 for weed control. The system comprises at least one sensor 110, an apparatus 10 for weed control as described with respect to an example or combination of examples described above with reference to Fig. 1. The system 100 also comprises at least one electrode based weed control unit 120. The at least one sensor 110 is configured to acquire the at least one sensor data of the environment. The at least electrode based weed control unit 120 is mounted on a vehicle 130. The apparatus 10 is configured to activate the at least one electrode based weed control unit 120.

According to an example, the apparatus is mounted on the vehicle, and the at least one sensor is mounted on the vehicle.

In an example, the vehicle is a train.

In an example, the vehicle is a lorry or truck or Unimog.

In an example, the input unit is configured to provide the processing unit with at least one location associated with the at least one sensor when the at least one sensor data was acquired. In an example, the location is a geographical location.

According to an example, the at least one sensor comprises one or more of: a camera; a ground moisture sensor; a ground texture sensor; a ground conductivity sensor; an electromagnetic induction sensor; a ground temperature sensor; a soil insertion sensor; a ground hardness sensor; a root occurrence sensor; a ground type sensor; a salinity sensor, a reflectance sensor.

In an example, the moisture sensor comprises a frequency domain reflectometer or time domain transmission or time domain reflectometer - in this way a probe or probes can be inserted into the ground and from signal frequency or speed of propagation signatures the dielectric constant of a volume element of the ground can be determined, from which the moisture content can be determined.

In an example, the moisture sensor comprises a ground resistance sensor determining the resistance between two electrodes or probes inserted into the ground, from which the moisture content can be determined in addition to the ground resistance and conductivity itself.

In an example, the ground texture and hardness is determined from the force required to insert one or more probes into the ground.

In an example, the ground temperature is measure using a temperature probe that is inserted into the ground.

In an example, the root occurrence sensor comprises a camera that acquires images, the analysis of which can be used to determine the types of weed present and their ground density from which the expected occurrence of roots and the types of roots in the ground can be determined.

Additionally, a reflectance signal from the ground, which could be spectrographically interrogated, can be analysed to provide information regarding the ground properties.

In this manner, one or more sensors or probes can be pushed into the ground, or otherwise acquire data at that position, and the ground properties determined. This can occur in real time, where the sensors or probes are mounted on the vehicle ahead of the electrode based weed control units, and are continuously pushed into the ground pulled out and then pushed into the next section of ground as the vehicle moves forward, and/or image or reflectance sensor data acquired. The ground properties are then determined, and the electrode based weed control units can be correctly configured, such that if they are required to be activated at any position they are already correctly primed to do so in an optimum manner.

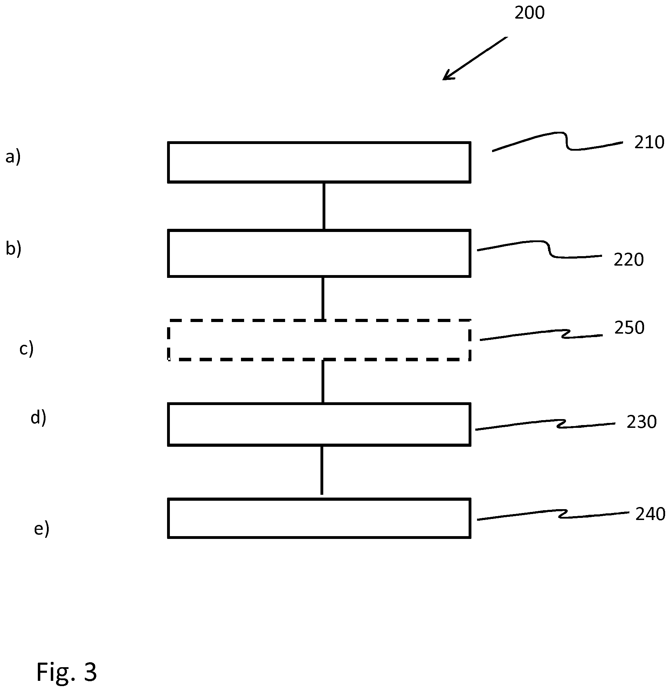

Fig. 3 shows a method 200 for weed control in its basic steps. The method 200 comprises:
in a providing step 210, also referred to as step a), providing a processing unit with a least one sensor data of an environment;
in an analyzing step 220, also referred to as step b), analysing by the processing unit at least some of the at least one sensor data to determine at least one ground property for each of a plurality of locations of the environment;
in a determining step 230, also referred to as step d), determining by the processing unit a power setting for activation of at least one electrode based weed control unit for each of the plurality of locations, wherein determination of the power setting for activation of the electrode based weed control unit comprises utilization of the at least one ground property associated with that location; and
in an outputting step 240, also referred to as step e), outputting by an output unit output information useable to activate the at least one electrode based weed control unit.

In an example, the at least one sensor data comprises at least one image, and wherein the method comprises step c), analysing 250 by the processing unit the at least one image to determine at least one activation location of the plurality of locations for activation of the at least one electrode based weed control unit.

In an example, step c) comprises determining at least one location of vegetation.

In an example, step d) comprises utilizing the determined at least one location of vegetation.

In an example, step c) comprises determining at least one type of weed.

In an example, step d) comprises utilizing the determined at least one type of weed.

In an example, step c) comprises utilising a machine learning algorithm.

In an example, the at least one ground property comprises one or more of: a measure of ground moisture; a measure of ground texture; a measure of ground conductivity; a measure of ground temperature; a measure of ground hardness; a measure of plant root occurrence; a measure of ground type; a measure of salinity.

In an example, the at least one sensor data was acquired by at least one sensor, and wherein the input unit is configured to provide the processing unit with at least one location associated with the at least one sensor when the at least one sensor data was acquired.

In an example, the at least one sensor comprises one or more of: a camera; a ground moisture sensor; a ground texture sensor; an electrical conductivity sensor; a soil insertion sensor; an electromagnetic induction sensor; a temperature sensor; a ground hardness sensor; a root occurrence sensor; a ground type sensor; a salinity sensor; at least one reflectance sensor configured to operate in one or more of the visible, the infrared, the near infrared, the mid infrared, the far infrared.

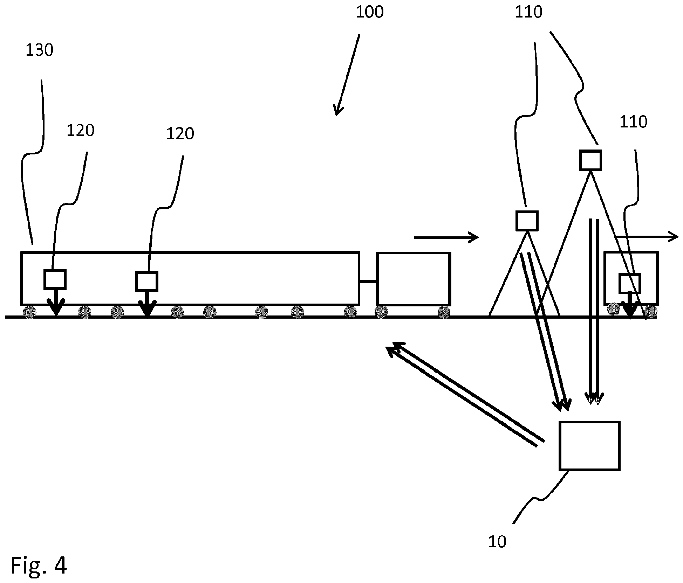

The apparatus, system and method for weed control are now described in more detail in conjunction with Figs. 4-8, which relate to weed control in the environment of a railway track, with the vegetation control technology (also called weed control technology) in the form of a number of electrode based weed control units being mounted on part(s) of the train.

Fig. 4 shows an example of a system 100 for weed control. Within the system several drones have sensors 110 in the form of cameras. The drones fly along a railway track. The cameras acquire imagery of the environment of the railway track, with this being the ground between the track and the ground to the sides of the track. The environment being imaged is that that is required to have weeds controlled. There need not be several drones, and one drone with one camera 110 can acquire the necessary imagery. Indeed, the imagery could have been acquired by a camera 110 or cameras 110 that were hand held by personnel visiting the railway track environment, by a plane, satellite or by a train that has run along the railway track for example. The imagery acquired by the cameras 110 is at a resolution that enables vegetation to be identified as vegetation and indeed can be at resolution that enables one type of weed to be differentiated from another type of weed. The acquired imagery can be colour imagery but need not be. The imagery acquired by the drones is transmitted to an apparatus 10. The imagery can be transmitted to the apparatus 10 as soon as it has been acquired by the cameras 110, or can be transmitted at a later time than when it was acquired, for example when the drones have landed. The drones can have Global Positioning Systems (GPS) and this enables the location of acquired imagery to be determined. For example the orientation of cameras 110 and the position of the drone when imagery was acquired can be used to determine the geographical footprint of the image at the ground plane. The drones can also have inertial navigation systems, based for example on laser gyroscopes. In addition to being used to determine the orientation of the drone and hence of the camera, facilitating a determination of when on the ground the imagery has been acquired, the inertial navigation systems can function alone without a GPS system to determine the position of the drone, by determining movement away from a known or a number of known locations.

Continuing with Fig. 4, a vehicle shown at the right of the picture is travelling along the railway track. This vehicle has a sensor or number of sensors 110. These sensors are used to determine the ground properties at different locations along the railway track. As the vehicle moves along, a number of sensors 110 in the form of probes are pushed into the ground, extracted and then pushed back into the ground at the next location as the vehicle has moved forward slightly. At the same time, a sensor 110 in the form of a radiation reflectance monitor determines the reflectance of the ground. As the probes are pushed into the ground the force required to push them a certain distance into the ground is measured - alternatively a constant force can be applied and the distance the probes are forced into the ground measured. In this way, a hardness of the ground at different locations can be determined. The conductivity of the ground between two probes is measured, and at least one of the probes has a thermometer to measure the ground temperature, and at least one of the probes has a salinity probe to measure ground salinity. A time domain transmission technique using two probes is used to determine a dielectric constant for ground at a location, from which the moisture content in the ground can be inferred. However, any of frequency domain reflectometer or time domain transmission or time domain reflectometer - where a probe or probes are inserted into the ground and from signal frequency or speed of propagation signatures the dielectric constant of a volume element of the ground can be used, from which the moisture content can be determined. From the image data as acquired by sensors 110 in the form of cameras carried by drones, as discussed above weeds can be identified and the expected root growth determined; for example certain roots can aid the transmission of electricity through the ground and this ground property can be taken into account when configuring the electrode based weed control unit for activation. Ground induction probing using sensors 110 pushed into the ground and spectral reflectance data using sensors 110 that acquire reflectance data from the ground is also acquired, and all this data constitutes ground properties at that probed location. These ground properties then mean that an electrode based weed control unit needs to be adjusted, in terms of voltage and/or current, in order to operate in an optimum manner. Offline testing is used to determine the optimum settings for this ground property parameter space and in effect forms a look-up table of settings. At each location, the electrode based weed control technology unit can then be appropriately configured to take into account the ground conditions at those locations, as determined from sensor based data acquisition. However, if there are no weeds at those locations, or it has been determined through image analysis that there is sensitive equipment that would be damaged if a unit was activated then the units are not activated. The imagery acquired by the drones is however analyzed to determine the locations and identities of weeds at different locations, and the electrode weed control units are then activated at those locations. As discussed, at that location the operational characteristics of the electrode based weed control unit are optimized for the ground conditions at that location. However, when there is a weed present, the configuration may need to change slightly from this ground based optimum to take into account the specific type of weed and the size for example of a clump of weeds. Thus, information relating to the presence of a weed is not used only to activate the electrode based weed control unit at that location, but to further optimize the operational characteristics to account for the weeds at that location and to account for the ground conditions at that location.

In further detail, an input unit 20 of the apparatus 10 passes the acquired imagery to a processing unit 30. Image analysis software operates on the processor 30. The image analysis software can use feature extraction, such as edge detection, and object detection analysis that for example can identify structures such as railway tracks, sleepers, trees, level crossings, station platforms. Thus, on the basis of known locations of objects, such as the locations of buildings within the environment, and on the basis of known structure information such as the distance between sleepers and the distance between the railway tracks, the processing unit can patch the acquired imagery to in effect create a synthetic representation of the environment that can in effect be overlaid over a geographical map of the environment. Thus, the geographical location of each image can be determined, and there need not be associated GPS and/or inertial navigation based information associated with acquired imagery. However, if there is GPS and/or inertial navigation information available then such image analysis, that can place specific images at specific geographical locations only on the basis of the imagery, is not required. Although, if GPS and/or inertial navigation based information is available then such image analysis can be used to augment the geographical location associated with an image. Thus for example, if on the basis of GPS and/or inertial navigation based information the centre of an acquired image is deemed to be located 22cm from the side edge and 67cm from the end of a particular railway sleeper of a section of railway, whilst from the actual acquired imagery, through the use of the above described image analysis, the centre of the image is determined to be located 25cm from the edge and 64cm from the end of the sleeper, then the GPS/inertial navigation based derived location can be augmented by shifting the location 3cm in one direction and 3cm in another direction as required.

The processor 30 runs further image processing software. This software analyses an image to determine the areas within the image where vegetation is to be found. Vegetation can be detected based on the shape of features within acquired images, where for example edge detection software is used to delineate the outer perimeter of objects and the outer perimeter of features within the outer perimeter of the object itself. A database of vegetation imagery can be used in helping determine if a feature in imagery relates to vegetation or not, using for example a trained machine learning algorithm such as an artificial neural network or decision tree analysis. The camera can acquire multi-spectral imagery, with imagery having information relating to the colour within images, and this can be used alone, or in combination with feature detection to determine where in an image vegetation is to be found. As discussed above, because the geographical location of an image can be determined, from knowledge of the size of an image on the ground, the location or locations of vegetation to be found in an image can then be mapped to the exact position of that vegetation on the ground.

The processor 30 then runs further image processing software that can be part of the image processing that determines vegetation location on the basis of feature extraction, if that is used. This software comprises a machine learning analyser. Images of specific weeds are acquired, with information also relating to the size of weeds being used. Information relating to a geographical location in the world, where such a weed is to be found and information relating to a time of year when that weed is to be found, including when in flower etc. can be tagged with the imagery. The names of the weeds can also be tagged with the imagery of the weeds. The machine learning analyser, which can be based on an artificial neural network or a decision tree analyser, is then trained on this ground truth acquired imagery. In this way, when a new image of vegetation is presented to the analyser, where such an image can have an associated time stamp such as time of year and a geographical location such as Germany or South Africa tagged to it, the analyser determines the specific type of weed that is in the image through a comparison of imagery of a weed found in the new image with imagery of different weeds it has been trained on, where the size of weeds, and where and when they grow can also be taken into account. The specific location of that weed type on the ground within the environment, and its size, can therefore be determined.

The processor 30 has access to a database containing different weed types, and the optimum mode of the electrode based weed control technology to be used in controlling that weed type, which has been compiled from experimentally determined data. This database can be the same database that accounts for configuration of the electrode based weed control unit as a function of the ground properties, and provides a juxtaposition of information relating to different weeds in different ground types, For example, the voltage and/or current and indeed duration of application can vary to account for different weeds at different locations.

Thus, sensor data is acquired that enables an electrode based weed control technology to be activated optimally to account for ground conditions and for weeds at those locations.

With continued reference to Fig. 4, following acquisition of all the sensor data from which a determination can be made, where electrode based weed control units should be activated to control weeds and what their specific configuration should be, later a weed control train 130 progresses along the railway track. The weed control train has a truck that contains a number of electrode based weed control units, with associated power supplies. The weed control train has a processor (not shown) which uses the above discussed information of where and in what manner the electrode based weed control units should be activated. The weed control train also has means to determine its geographical location, which can be based on one or more of GPS, inertial navigation, image analysis in order to locate the position of the weed control train and the specific locations of the units of the electrode based weed control technology. This means that when the weed control train passes through the environment the different units of the electrode based weed control technology can be activated at the specific locations of weeds, where the specific mode of the weed control technology activated at the location of the weed has been determined to be optimal for that task.

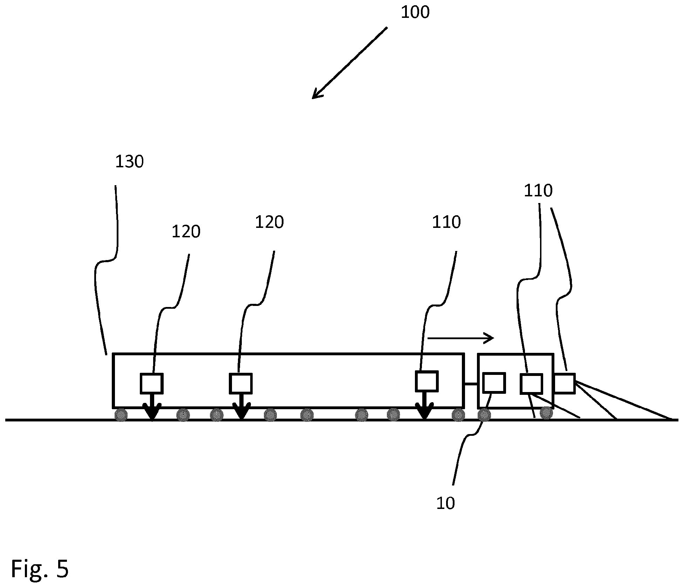

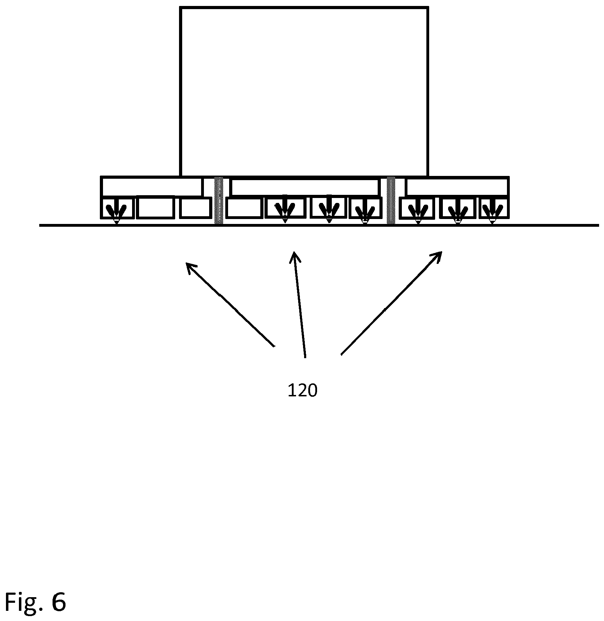

Fig. 5 shows another example of a system 100 for weed control. The system for weed control of Fig. 5 is similar to that shown in Fig. 4. However, in Fig. 5 the weed control train 130 has sensors 110 in the form of cameras, ground insertion probes and ground reflectance sensors as discussed above with respect to Fig. 4. The weed control train 130 of Fig. 5 also has an apparatus 10 as previously discussed. The cameras 110 on the weed control train 130 now acquire that imagery that was previously acquired by the drones, and the probes 110 acquire the sensor data used to determine ground properties as discussed above with respect to Fig. 4. The processor 30 of the apparatus on the weed control train 130 processes the acquired imagery to determine the location and type of weed, and the ground properties are determined to configure the electrode based weed control units for activation along, where the specific activation settings are further adjusted to take into account weeds at specific locations and the units are activated only where there are weeds. The exact geographical location of the weed, and the exact location of particular ground properties, are not then required to be determined. Rather, on the basis of a relative spacing between the sensors 110 themselves (cameras, ground insertion probes, and reflectance sensors) and between the sensors and the electrode based weed control units 120 housed in the truck of the train 130 weeds can be located and identified along with the ground properties at that location, and the electrode based weed control units can be optimally configured to operate at that location. Then, from knowledge of the forward motion of the weed control train (its speed), because the distance between sensors 110 and units 120 are known, the units 120 can be activated, optimally configured, where weeds are located from the time taken to move the units 120 to specific locations where weeds have been identified as being located. In this way, the weed control train does not need to have a GPS and/or inertial navigation system or image based absolute geographical location determination means. Rather, to account for the processing required to determine the type of weed and its exact location within an image and its exact location on the ground - within a train coordinate system - and the time taken to determine the ground properties and time taken to configure the electrode based weed control units (leading to a total processing and configuration time) the sensors 110 must be spaced from the weed control technologies 120 by a distance that is at least equal to the processing time multiplied by the maximum velocity of the weed control train during weed control. Thus for example, if the total processing and configuration time takes 0.2s, 0.4s, or 0.8s for a train travelling at 25m/s, with reference to Fig. 5 the sensors 110 must be spaced forward of the electrode based weed control technology units 120 by 5m, 10m or 20m for this train velocity. A reduction in train velocity enables the separation to be reduced. In addition, the cameras 110 that are acquiring the imagery can have very short exposure times in order that image smear due to movement of the train during the exposure time is minimized. This can be by various means, including the use of cameras with short exposure times or short pulsed illumination via for example lasers or LEDs in combination with filters for example. However, the apparatus can use a GPS system and/or inertial navigation system and/or image analysis to determine an exact geographical location of weeds. This means that a log of what weeds have been controlled and how the electrode based weed control unit was configured can be saved where those weeds were located can be determined and saved, as well as what the ground properties were at those locations saved. Also, by generating an exact geographical location of the weeds, the electrode based weed control units 120 can have associated location determining means, such as a GPS system and/or inertial navigation system and/or image based system that can be used to provide the exact position of the units 120. Thus, a front carriage of a train can have the sensors 110 that have associated location determining means such as GPS, and the data from which can be used to determine the location and type of weeds at exact known locations and the ground properties at those locations from which the units 120 can be optimally configured for activation at those locations. The last truck of a train could then have the electrode based weed control units housed within them. These latter trucks could be spaced from the front carriage by many tens if not hundreds of metres by load carrying trucks. The absolute separation of the front carriage to the rear carriages could then vary as the train goes up and down hill, but because the trucks with the weed control units know their exact locations as do the sensors, when the units have moved forwards to the position where a weed has determined to reside along with a determination of the ground properties at that location, the electrode based weed control units can activate at an optimal configuration at those exact locations to control those weeds. The electrode based weed control units extend laterally beneath and to the side of the train, as shown in Fig 6, in order to control weeds between the train tracks and to the sides of the track and up the banks if necessary.

Fig. 6 shows a rear view of the truck of a weed control train 130 as shown in Figs 4-5, that has a number of high voltage electrode based weed control technology units 120. Fig. 6 shows the rear view of this truck of the train, with the view being that down the railway track. Each electrode based unit is activating where a weed has been determined to be, at a voltage and current setting that takes into account the local ground properties and the specific weed and size of that weed. As discussed above, simple experiments can be performed for different weeds to determine the different voltages and power levels and duration of application required in order to kill different weed types, enabling a database to be constructed from which the mode of operation of the high voltage technology can be selected. Also, simple experiments can be performed to determine what the optimum settings are for the units as a function of different ground properties, again enabling a database to be constructed of settings. The units can then be set at a level appropriate for the ground conditions, and have that setting adjusted to take into account the weeds at locations.

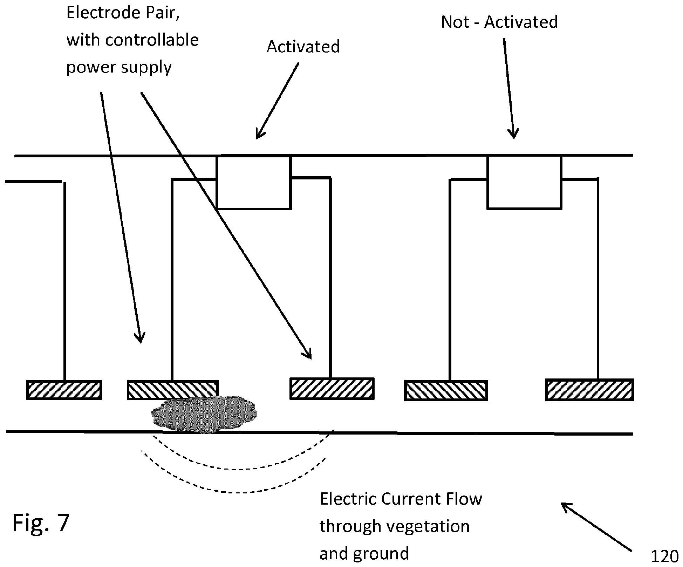

Continuing with Fig. 6, a number of separate electrode pairs of the weed control technology extend laterally beneath the train and to the sides of the train, with these shown in greater detail in Fig. 7. Each electrode pair forms a separate electrode based weed control unit. The electrodes can also extend in a forward direction. When one of these electrode pairs passes over a weed that has been identified as one that should be controlled by that high voltage based weed control the processor 30 activates the specific pair or pairs of electrodes at the specific location of the weed that is required to be controlled by that high voltage and power. In Fig. 6 there are two specific locations of such a weed, one a large clump to be found between the track that also extends to the right hand side of the track and a small clump to be found to the left of the tracks, and accordingly one electrode pair has been activated at the left hand side and a number activated beneath the train extending to the right hand side.

Fig. 7 shows more detail of the high voltage based weed control technology. Pairs of electrodes are provided to form individual electrode based weed control units, which when activated cause electric current to flow from one electrode to the other via the weed and the ground including the weed's root. One sub-unit shown can have one electrode pair or indeed have a number of electrode pairs in order to provide for greater resolution and a smaller spatial extent of the application of such high voltage based weed control. The high voltage can be applied in a DC mode for a period of time or in an AC mode for a period of time.

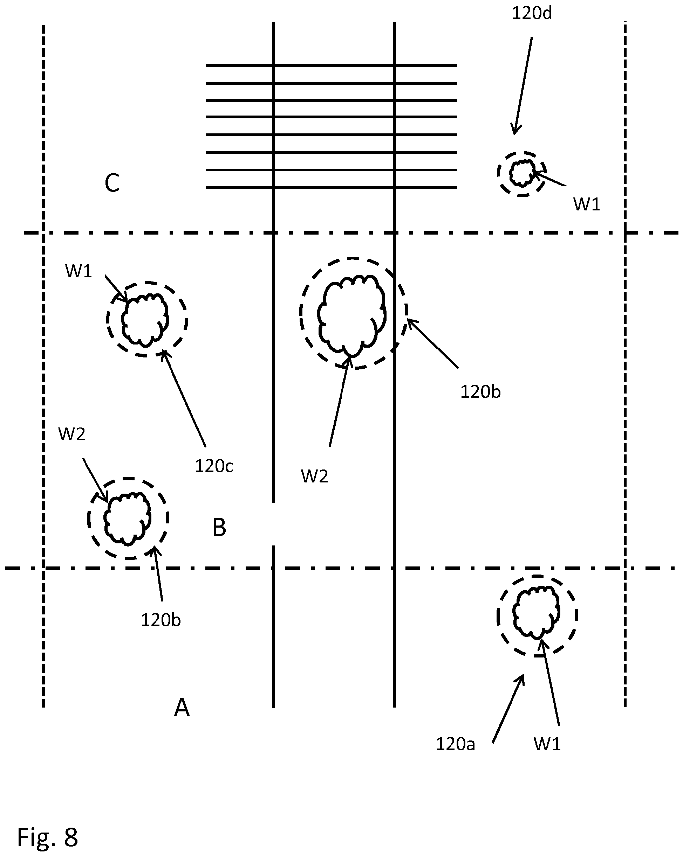

Fig. 8 shows a representation of a railway environment, showing the railway tracks and the ground to the side of the tracks. There are three different areas of track with different ground properties, shown as A, B, and C divided by dot-dash lines. Area A is a loamy soil type, and area B is also loamy type soil but is wetter than area A, whilst area C is more sandy with a large number of stones. If the electrode based voltage and power setting for area A is considered to be a baseline, then because the ground in area B is more conductive due to the presence of water the voltage and power setting for the electrode based weed control units can be lower than the baseline in area B. However, for the sandy and stony area C, the current cannot flow through the ground as efficiently as for a dense ground structure and as such the voltage and power setting for the electrode based weed control unit needs to be greater than the baseline.

Continuing with Fig. 8, a number of weeds are shown. A first type of weed "WI" exists in a small clump in areas A, B, and C. A second type of weed "W2" only exists in area B. For the first weed type "W1", the setting for the electrode based weed control unit is different in each area (A, B, and C) because of the different ground properties and the optimized settings are respectively shown as 120a, 120c and 120d. In the second area B, there are two types of weed "WI" and "W2". The ground properties are however the same, leading to a first degree or level of voltage/power being determined, which is then adjusted to account for the specific weeds being controlled. Therefore, in area B weed W1 is controlled with optimized voltage and power setting 120c, whilst weed W2 is controlled with optimized voltage and power setting 120b. As discussed previously, voltage and power settings, in an optimized form, can different for the same weed type in ground of the same ground properties to account for the size of the clump, with a larger clump being controlled with a higher level of voltage/power. However, this has not been shown in Fig. 8 for purposes of simplicity of representation.

The above detailed examples have been discussed with respect to a railway, however a weed control train, a truck or lorry or Unimog can have electrode based weed control units mounted on/within it that can use sensors to determine ground properties and types of weeds in order to control those specific weed types as discussed above.

### Image processing to enable analysis to determine a weed type

A specific example of how an image is processed, and determined to be suitable for image processing in order that a type of weed can be determined is now described:
1. A digital image - in particular a colored image - of a weed is captured.
2. Areas with a predefined color and texture within the digital image are contoured within a boundary contour. Typically, one may expect one contoured area from one weed plant. However, there may also be more than one contoured area from different, potentially not connected leafs, from two weed plants, or the like. - Such a detection or determining process detects boundaries of green areas of the digital image. During this process at least one contoured area - e.g., one or more leafs, as well as one or more weed plants - may be built comprising pixels relating to the weed within a boundary contour. However, it may also be possible, that the digital image has captured more than one leaf and/or the stem. Consequently, more than one contoured area may be determined.
3. Determining if the boundary contour covers a large enough area, and determining a sharpness (e.g. degree of focus) of the image data within the boundary contour. This firstly ensures that there will be sufficient image data upon which a determination can be made as to the type of weed, and secondly determines that a minimum quality of the digital image will be satisfied in order that the type of weed can be made.
4. If both criteria in 3) are satisfied, the digital image, and specifically that within the boundary contour is sent to the processing unit for image analysis by the artificial neural network to determine the type of weed as described above.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An apparatus (10) for weed control, comprising:
- an input unit (20);
- a processing unit (30); and
- an output unit (40);
wherein, the input unit is configured to provide the processing unit with a least one sensor data of an environment;
wherein, the processing unit is configured to analyse at least some of the at least one sensor data to determine at least one ground property for each of a plurality of locations of the environment;
wherein, the processing unit is configured to determine a power setting for activation of at least one electrode based weed control unit for each of the plurality of locations, wherein determination of the power setting for activation of the electrode based weed control unit comprises utilization of the at least one ground property associated with that location; and
wherein the output unit is configured to output information useable to activate the at least one electrode based weed control unit.

2. Apparatus according to claim 1, wherein the at least one sensor data comprises at least one image, and wherein the processing unit is configured to analyse the at least one image to determine at least one activation location of the plurality of locations for activation of the at least one electrode based weed control unit.

3. Apparatus according to claim 2, wherein analysis of the at least one image to determine the at least one activation location comprises a determination of at least one location of vegetation.

4. Apparatus according to claim 3, wherein determination of the power setting for activation of the at least one electrode based weed control unit for the activation location comprises utilization of the determined at least one location of vegetation.

5. Apparatus according to any of claims 2-4, wherein analysis of the at least one image to determine the at least activation location comprises a determination of at least one type of weed.

6. Apparatus according to claim 5, wherein determination of the power setting for activation of the at least one electrode based weed control unit for the activation location comprises utilization of the determined at least one type of weed.

7. Apparatus according to any of claims 2-6, wherein analysis of the at least one image comprises utilisation of a machine learning algorithm.

8. Apparatus according to any of claims 1-7, wherein the at least one ground property comprises one or more of: a measure of ground moisture; a measure of ground texture; a measure of ground conductivity; a measure of ground temperature; a measure of ground hardness; a measure of plant root occurrence; a measure of ground type; a measure of salinity.

9. Apparatus according to any of claims 1-8, wherein the at least one sensor data was acquired by at least one sensor, and wherein the input unit is configured to provide the processing unit with at least one location associated with the at least one sensor when the at least one sensor data was acquired.

10. Apparatus according to claim 9, wherein the at least one sensor comprises one or more of: a camera; a ground moisture sensor; a ground texture sensor; an electrical conductivity sensor; a soil insertion sensor; an electromagnetic induction sensor; a temperature sensor; a ground hardness sensor; a root occurrence sensor; a ground type sensor; a salinity sensor; at least one reflectance sensor configured to operate in one or more of the visible, the infrared, the near infrared, the mid infrared, the far infrared.

11. A system (100) for weed control, comprising:
- at least one sensor (110);
- an apparatus (10) for weed control according to any of claims 1-10; and
- at least one electrode based weed control unit (120);
wherein, the at least one sensor is configured to acquire the at least one sensor data of the environment;
wherein, the at least electrode based weed control unit is mounted on a vehicle (130); and
wherein, the apparatus is configured to activate the at least one electrode based weed control unit.

12. System according to claim 11, wherein the apparatus is mounted on the vehicle; and wherein the at least one sensor is mounted on the vehicle.

13. System according to any of claims 11-12, wherein the at least one sensor comprises one or more of: a camera; a ground moisture sensor; a ground texture sensor; a ground conductivity sensor; an electromagnetic induction sensor; a ground temperature sensor; a soil insertion sensor; a ground hardness sensor; a root occurrence sensor; a ground type sensor; a salinity sensor, a reflectance sensor.

14. An method (200) for weed control, comprising:
a) providing (210) a processing unit with a least one sensor data of an environment;
b) analysing (220) by the processing unit at least some of the at least one sensor data to determine at least one ground property for each of a plurality of locations of the environment;
d) determining (230) by the processing unit a power setting for activation of at least one electrode based weed control unit for each of the plurality of locations, wherein determination of the power setting for activation of the electrode based weed control unit comprises utilization of the at least one ground property associated with that location; and
e) outputting (240) by an output unit output information useable to activate the at least one electrode based weed control unit.

15. A computer program element for controlling an apparatus according to any of claims 1 to 10 and/or system according to any of claims 11-14, which when executed by a processor is configured to carry out the method of claim 14.
